# FASCICULE DE BREVET EUROPEEN

(11) **EP 4 496 744 B1**
(45) Date de publication et mention de la délivrance du brevet: **02.09.2026**
(21) Numéro de dépôt: 23714646.9
(22) Date de dépôt: 21.03.2023
(51) Int. Cl.: B64U 10/14, B64U 20/70, B64U 20/80, B64U 30/24, B64U 30/294, B64U 30/297, B64U 50/19

(54) **VÉHICULE PROPULSÉ OMNIDIRECTIONNEL COMPORTANT UN PREMIER ARBRE ROTATIF**
OMNIDIREKTIONAL ANGETRIEBENES FAHRZEUG MIT EINER ERSTEN DREHWELLE
OMNIDIRECTIONAL PROPELLED VEHICLE COMPRISING A FIRST ROTARY SHAFT

(30) Priorité: 22.03.2022 FR 2202534
(43) Date de publication de la demande: 29.01.2025
(73) Titulaire: Aerix Systems, 33700 Merignac (FR)
(72) Inventeur: MAYOUNOVE, Hugo, 33700 MERIGNAC (FR); PICAUD, Clément, 33700 MERIGNAC (FR)
(74) Mandataire: Aquinov
(86) Numéro de dépôt international: PCT/EP2023/057119
(87) Numéro de publication internationale: WO 2023/180267

(56) Documents cités:
- EP-A1- 0 299 854
- CN-A- 107 757 912
- CN-A- 108 313 291
- CN-A- 110 697 035
- US-A1- 2018 354 607

## Description

L'invention concerne le domaine des véhicules propulsés, notamment des véhicules aériens pilotés à distance, ou drone. Plus précisément, l'invention concerne un véhicule propulsé incorporant une solution de connexion électrique entre un stator et un rotor.

Un véhicule aérien piloté à distance, également nommé UAV (de l'anglais « Unmanned Aerial Vehicle) ou drone, comporte de façon connue plusieurs propulseurs, par exemple munis d'hélices ou de pâles, montés sur un châssis. Afin de contrôler la direction du drone, chaque propulseur peut être muni d'un variateur de vitesse électrique contrôlable à distance, par exemple depuis une manette manipulée par un utilisateur. La direction du drone peut ainsi être contrôlée en augmentant la vitesse de rotation des hélices de certains propulseurs et/ou en diminuant la vitesse de rotation des hélices d'autres propulseurs.

Si ce type de technologie permet effectivement de contrôler la direction du drone, elle n'offre pas une maniabilité du drone satisfaisante, en particulier dans une large plage de vitesse et/ou de mouvement. Afin de pallier cet inconvénient, il est également connu d'agencer chaque propulseur sur un arbre monté pivotant sur le châssis, l'arbre pouvant être entrainé par un moteur. L'utilisateur est ainsi capable de contrôler, à distance, le moteur de l'arbre pour modifier l'orientation du propulseur et ainsi contrôler la direction du drone.

Un tel drone est par exemple décrit dans le document US2018354607.

Le document CN 108 313 291 A divulgue un véhicule propulsé comportant une source de puissance électrique, un châssis, un premier arbre supportant un propulseur dudit véhicule propulsé, monté rotatif sur le châssis autour d'un premier axe de rotation, et un premier dispositif d'entrainement en rotation du premier arbre autour dudit premier axe de rotation, tel que que le châssis comporte un premier organe de guidage en rotation du premier arbre autour dudit premier axe de rotation et tel que le premier arbre comporte un premier organe complémentaire agencé pour coopérer mécaniquement avec le premier organe de guidage de sorte à supprimer au moins un degré de liberté du premier arbre.

Dans ce type d'architecture, la batterie du drone est également agencée sur le châssis du drone. Se pose alors la question de la liaison électrique entre la batterie et le propulseur du drone. Il est en effet nécessaire de permettre une rotation de l'arbre vis-à-vis du châssis tout en transmettant, sans interruption, la puissance électrique fournie par la batterie au propulseur monté sur cet arbre.

Une solution pour répondre à ce besoin est d'utiliser un collecteur dit tournant, par exemple à bague rotative. Ce type de collecteur comporte une bague montée sur un rotor, sur laquelle viennent se plaquer des balais, ou charbons, qui permettent ainsi de transmettre la puissance électrique de la batterie vers l'arbre, y compris lorsque l'arbre est en rotation.

Si un collecteur tournant permet effectivement de répondre au besoin mentionné ci-dessus, la puissance électrique nécessaire au fonctionnement d'un drone requiert un dimensionnement particulièrement important du nombre de balais et de la taille de ces balais, qui entraine alors un encombrement considérable du collecteur. Cet encombrement pose ainsi un certain nombre de problèmes, notamment en termes de coût, de poids et de perturbations que le collecteur est susceptible d'engendrer sur le flux d'air généré par le propulseur. Ce dernier point est particulièrement critique, compte tenu de la proximité qu'il peut exister entre le collecteur et le propulseur. Ce type de collecteur n'est donc pas satisfaisant.

Ces inconvénients se retrouvent également dans d'autres domaines techniques, par exemple pour des drones sous-marins (également nommés AUV ou « Autonomous Under-water Vehicle), et de façon plus large pour n'importe quel véhicule muni d'un propulseur rotatif devant être alimenté électriquement.

Il existe ainsi un besoin pour un véhicule propulsé dont le ou chaque propulseur est agencé sur un arbre monté rotatif sur un châssis, et qui incorpore une solution peu encombrante de transmission de la puissance électrique fournie par une source d'énergie montée sur le châssis au propulseur.

La présente invention se place dans ce contexte et vise à répondre à ce besoin.

A ces fins, l'invention a pour objet un véhicule propulsé comportant :
a. une source de puissance électrique,
b. un châssis supportant la source de puissance électrique,
c. un premier arbre supportant un propulseur dudit véhicule propulsé, monté rotatif sur le châssis autour d'un premier axe de rotation, et
d. un premier dispositif d'entrainement en rotation du premier arbre autour dudit premier axe de rotation.

L'invention est remarquable en ce que le châssis comporte un premier organe de guidage en rotation du premier arbre autour dudit premier axe de rotation, en ce que le premier arbre comporte un premier organe complémentaire agencé pour coopérer mécaniquement avec le premier organe de guidage de sorte à supprimer au moins un degré de liberté du premier arbre, et en ce que le premier organe de guidage et le premier organe complémentaire sont électriquement conducteurs et sont reliés électriquement l'un à l'autre, le premier organe de guidage étant relié électriquement à la source de puissance électrique et le premier organe complémentaire étant relié électriquement au propulseur.

On comprend ainsi que l'invention propose de tirer parti d'un élément déjà présent dans l'architecture du véhicule propulsé, à savoir un organe de guidage en rotation du premier arbre sur le châssis, en lui conférant une deuxième fonction de transmission d'une puissance électrique. Il s'avère en effet que les organes de guidage en rotation présents dans un véhicule propulsé, ainsi que les organes complémentaires, peuvent être réalisés dans un matériau électriquement conducteur, par exemple en bronze. Il peut indifféremment s'agir d'organes de guidage par contact direct, par interposition d'une bague de frottement ou d'un revêtement de surface, ou encore par élément roulant, et employant notamment des roulements, des paliers ou encore des patins. Ces organes de guidage en rotation sont en plus nécessairement en contact avec les organes complémentaires, le long de la rotation du premier arbre, afin de pouvoir réaliser leur fonction de guidage. En reliant électriquement un organe de guidage à la source de puissance électrique du véhicule propulsé et l'organe complémentaire à cet organe de guidage au propulseur du véhicule propulsé, la puissance électrique peut donc transiter du châssis vers le propulseur via ce contact entre l'organe de guidage et l'organe complémentaire, y compris lorsque l'orientation du propulseur est modifiée au moyen d'une rotation de l'arbre, sans toutefois générer un encombrement supplémentaire.

Dans l'invention, le châssis peut supporter directement ou indirectement la source de puissance électrique et le premier arbre peut supporter directement ou indirectement le propulseur. Les termes « support indirect » peuvent par exemple indiquer qu'un ou plusieurs éléments peuvent être mécaniquement interposés entre la source de puissance électrique, respectivement le propulseur, et le châssis, respectivement le premier arbre. Par exemple, la source de puissance électrique pourra être une batterie électrique logée dans un réceptacle du châssis prévu à cet effet.

Dans l'invention, le premier organe de guidage peut être relié électriquement directement ou indirectement à la source de puissance électrique et le premier organe complémentaire peut être relié électriquement directement ou indirectement au propulseur. Les termes « liaison électrique indirecte » peuvent par exemple indiquer qu'un ou plusieurs éléments peuvent être électriquement interposés entre la source de puissance électrique, respectivement le propulseur, et le premier organe de guidage, respectivement le premier organe complémentaire. Par exemple, un câble pourra être relié à une batterie électrique du véhicule propulsé et être soudé sur le premier organe de guidage.

Dans l'invention, le premier organe de guidage coopère avec le premier organe complémentaire pour supprimer au moins un degré de liberté du premier arbre, c'est-à-dire pour s'opposer à un déplacement du premier arbre dans une direction donnée ou pour s'opposer à une rotation du premier arbre autour d'un axe donné, cet axe étant nécessairement distinct du premier axe de rotation. Le premier organe de guidage et le premier organe complémentaire pourront coopérer pour s'opposer ensemble à un déplacement du premier arbre dans une direction parallèle au premier axe de rotation et/ou dans une direction perpendiculaire au premier axe de rotation. On pourra envisager que le premier organe de guidage coopère avec le premier organe complémentaire pour supprimer plusieurs degrés de liberté du premier arbre. De façon alternative ou cumulative, on pourra envisager que le châssis comporte une pluralité de premiers organes de guidage en rotation, chacun coopérant avec un premier organe complémentaire prévu sur le premier arbre pour supprimer un degré de liberté du premier arbre, étant entendu que ces premiers organes de guidage et les premiers organes complémentaires peuvent être tous structurellement distincts les uns des autres et/ou peuvent supprimer des degrés de liberté différents les uns des autres et/ou participer à la fonction de transmission de puissance électrique du châssis au premier arbre. On pourra en particulier envisager qu'une seule paire de premier organe de guidage et de premier organe complémentaire soit électriquement conducteur et/ou soit électriquement reliée à la source de puissance électrique et au propulseur.

Dans l'invention, le châssis peut présenter une forme de plaque dans laquelle est ménagé un espace, par exemple sensiblement circulaire, dans lequel peut tourner le premier arbre autour du premier axe de rotation. Le châssis pourra par exemple être un empilement de plusieurs couches, dont par exemple deux couches centrales réalisées par impression 3D d'un polymère, notamment comprenant un acide polylactique (ou PLA, de l'anglais « poly-lactic acid ») ou d'une couche de mousse en polyuréthane, recouvert d'une couche supérieure et d'une couche inférieure d'un autre matériau, par exemple de carbone ou d'aluminium. Le cas échéant, un ou plusieurs câbles électriques reliés à la source de puissance électrique pourront être logés dans un logement prévu entre les couches centrales ou dans des inserts prévus dans une couche centrale pour le passage des câbles. Si on le souhaite, le châssis pourra comporter une pluralité d'espaces, notamment quatre espaces, et une pluralité, notamment quatre, de premiers arbres, supportant chacun un propulseur et entrainé chacun par un premier système d'entrainement, pourront être montés chacun rotatifs sur le châssis dans l'un de ces espaces.

Dans un premier mode de réalisation de l'invention, le premier dispositif d'entrainement comporte un moteur équipé d'un axe rotatif autour du premier axe de rotation; le premier arbre comporte un organe de transmission relié mécaniquement à l'axe rotatif du moteur de sorte qu'une rotation de l'axe du moteur soit transmise au premier arbre; le premier organe complémentaire comporte un premier palier monté sur l'organe de transmission et le premier organe de guidage en rotation comporte un deuxième palier monté concentriquement autour du premier palier. Cette configuration permet de réduire considérablement l'encombrement et le poids des éléments participant à la transmission de la puissance électrique au propulseur.

Avantageusement, le premier arbre pourra être supporté en deux points distincts du châssis, lesdits points définissant le premier axe de rotation, et le premier dispositif d'entrainement pourra être logé dans le châssis, au niveau d'un de ces points de support du premier arbre sur le châssis.

Par exemple, le premier système d'entrainement pourra comporter un cylindre de transmission à section polygonale, notamment hexagonale, entrainé par un moteur et engagé dans un orifice de l'organe de transmission du premier arbre, de section complémentaire à celle du cylindre de transmission, la jonction entre le cylindre de transmission et l'orifice de l'organe de transmission formant l'un des points de support du premier arbre sur le châssis. Ces caractéristiques permettent une jonction robuste entre le premier système d'entraine-ment et le premier arbre et qui ne fragilise pas le premier arbre au cours du temps, même si celui-ci est réalisé par impression 3D d'un polymère. En variante, le cylindre de transmission pourra être de section circulaire tronquée pour former un méplat. Le cas échéant, le moteur pourra comporter un axe rotatif, autour du premier axe de rotation, inséré dans le cylindre de transmission, une vis de pression étant vissée dans un taraudage du cylindre de transmission, prévu au droit de la réservation du cylindre de transmission dans laquelle s'insère l'axe rotatif du moteur, pour solidariser le cylindre de transmission à l'axe rotatif du moteur. En variante, on pourra prévoir que l'organe de transmission du premier arbre comporte une portion de section polygonale s'insérant dans un orifice de section complémentaire prévu le cylindre de transmission.

Avantageusement, le premier palier pourra être une bague ou un manchon réalisé dans un matériau électriquement conducteur, notamment en bronze et par exemple en bronze fritté et imprégné et/ou revêtu d'un lubrifiant comme de la graisse électriquement conductrice, d'axe longitudinal sensiblement identique au premier axe de rotation et monté de façon fixe sur l'organe de transmission du premier arbre qui est emmanché dans ce premier palier. Le cas échéant, au moins un câble relié électriquement au propulseur peut être soudé au premier palier. En variante, ledit câble pourra être inséré dans une cosse montée et reliée électriquement au premier palier.

De préférence, le deuxième palier pourra être une bague ou un manchon réalisé dans un matériau électriquement conducteur, notamment en bronze et par exemple en bronze fritté et imprégné et/ou revêtu d'un lubrifiant comme de la graisse électriquement conductrice, d'axe longitudinal sensiblement identique au premier axe de rotation, monté de façon libre ou fixe sur le châssis et de diamètre sensiblement supérieur à celui du premier palier. Le cas échéant, au moins un câble relié électriquement à la source de puissance électrique peut être soudé au deuxième palier. En variante, ledit câble pourra être inséré dans une cosse montée et reliée électriquement au deuxième palier.

Avantageusement, la surface intérieure du deuxième palier et la surface extérieure du premier palier sont lisses et sont en contact direct l'une avec l'autre. En variante, un revêtement, notamment un film d'huile ou de graisse électriquement conductrice revêtant ou imprégnant l'un et/ou l'autre des paliers, pourra être interposé entre la surface intérieure du deuxième palier et la surface extérieure du premier palier.

Dans un exemple de réalisation du premier mode, le premier arbre comporte un cadre comprenant deux pivots diamétralement opposés et montés chacun pivotant dans un renfoncement du châssis, lesdits renfoncements se faisant face. Le cas échéant, l'organe de transmission est agencé sur l'un des pivots pour s'étendre dans un desdits renfoncements, l'axe rotatif du moteur s'étend dans ce renfoncement et le premier palier est agencé dans ce renfoncement, le profil du renfoncement correspondant sensiblement à celui du deuxième palier. Dans cet exemple, l'un des pivots forme l'organe de transmission du premier arbre et la liaison entre chaque pivot du premier arbre et le renfoncement du châssis forme l'un des points de support du premier arbre sur le châssis. A titre d'exemple non limitatif, le cadre pourra être de forme sensiblement circulaire, ovale, elliptique, conique ou oblongue.

Dans un exemple, le pivot formant l'organe de transmission du premier arbre pourra être formé par deux demi-coques assemblées l'une à l'autre, l'une des demi-coque étant reliée au reste du premier arbre, et chaque demi-coque comporte une rainure, les rainures venant en vis-à-vis l'une de l'autre, lorsque les demi-coques sont assemblées, pour former l'orifice de l'organe de transmission dans lequel s'insère le cylindre de transmission.

Avantageusement, le deuxième palier comporte une butée périphérique, notamment s'étendant sur tout le pourtour du deuxième palier et de préférence formée au niveau d'un bord du deuxième palier, et le renfoncement comporte une gorge périphérique dans laquelle est logée la butée périphérique du deuxième palier. Cette butée périphérique et cette gorge périphérique permet de réaliser un blocage en translation du premier arbre selon une direction perpendiculaire au premier axe de rotation et selon le premier axe de rotation.

De préférence, le premier palier comporte une butée périphérique, notamment s'étendant sur tout le pourtour du premier palier et de préférence formée au niveau d'un bord du premier palier. Le cas échéant, la butée périphérique du premier palier peut venir en vis-à-vis d'un rebord périphérique du renfoncement et/ou être enserrée entre la butée périphérique du deuxième palier et un rebord du premier arbre prévu au droit de l'organe de transmission du premier arbre. Ces caractéristiques permettent de renforcer le blocage en translation du premier arbre, selon la direction perpendiculaire au premier axe de rotation et selon le premier axe de rotation. En variante, la butée périphérique du deuxième palier pour venir contre une paroi du renfoncement et la butée périphérique du premier palier pourra être opposée à la butée périphérique du deuxième palier et venir en butée contre une paroi du premier arbre opposée à la paroi du renfoncement. En d'autres termes, les paliers sont enserrés, via leurs butées, entre des parois opposées du renfoncement et du premier arbre.

Dans un deuxième mode de réalisation de l'invention, le premier arbre comprend une couronne de forme de révolution autour du premier axe de rotation, le premier organe complémentaire comporte une bande montée sur la couronne et le premier organe de guidage en rotation comporte un patin en appui plan sur ladite bande.

Dans un exemple de réalisation de l'invention, ladite couronne comporte une pluralité de dents agencées sur au moins une partie, notamment la totalité, de sa circonférence et ledit premier système d'entrainement comporte un pignon, ou un engrenage ou une roue dentée, entrainé par un moteur et engrené sur lesdites dents de la couronne. En d'autres termes, une rotation d'un axe dudit premier moteur, sur lequel est monté le pignon, est transmise à la couronne au travers de la rotation dudit pignon. Dans un autre exemple de réalisation de l'invention, le premier système d'entrainement comporte une courroie en-trainée par un moteur et tendue sur la circonférence de ladite couronne. En d'autres termes, une rotation d'un axe dudit premier moteur, sur lequel est monté une poulie sur laquelle est tendue la courroie, est transmise à la couronne au travers de la rotation de cette poulie.

Le cas échéant, l'élément du premier système d'entrainement engrené sur ladite pluralité de dents et ladite pluralité de dents peuvent être électriquement conducteurs et reliés électriquement l'un à l'autre, ledit élément étant relié électriquement à la source de puissance électrique et ladite pluralité de dents étant reliée électriquement au propulseur. En variante, au moins la courroie, la poulie et la partie de la couronne sur laquelle est tendue ladite courroie peuvent être électriquement conductrices, la poulie et ladite partie de la couronne étant reliées électriquement l'une à l'autre au travers de la courroie, la poulie étant reliée électriquement à la source de puissance électrique et ladite partie de la couronne étant reliée électriquement au propulseur.

Avantageusement, la bande est une portion de bague ou une bague complète réalisée dans un matériau électriquement conducteur, notamment en aluminium, la bande étant fixée, par exemple par vissage, à une surface supérieure ou inférieure de la couronne du premier arbre. Le cas échéant, on pourra envisager que le premier organe complémentaire comporte plusieurs bandes réparties sur la circonférence de la couronne du premier arbre. Si on le souhaite, la bande pourra être revêtue d'un revêtement, notamment un film d'huile ou de graisse électriquement conductrice revêtant ou imprégnant l'un et/ou l'autre de la bande et/ou du patin, venant s'interposer entre la bande et le patin. De préférence, au moins un câble relié électriquement au propulseur peut être soudé à la bande. En variante, ledit câble pourra être inséré dans une cosse montée et reliée électriquement à la bande.

Avantageusement, le patin est réalisé dans un matériau électriquement conducteur, notamment en bronze. Le premier organe de guidage pourra comporter plusieurs patins, décalés radialement et/ou longitudinalement, en appui plan sur ladite bande. De préférence, au moins un câble relié électriquement à la source de puissance électrique peut être soudé au patin. En variante, ledit câble pourra être inséré dans une cosse montée et reliée électriquement au patin.

Si on le souhaite, le premier organe de guidage pourra également comporter un rouleau ou un roulement, notamment décalé radialement en arrière du patin ou décalé longitudinalement du patin, et venant en contact avec la couronne du premier arbre ou avec la bande. Par exemple, le rouleau pourra être monté rotatif sur le châssis autour d'un axe sensiblement parallèle au premier axe de rotation et pourra venir au contact d'une nervure prévue sur la couronne. En variante, le roulement pourra être monté rotatif sur le châssis autour d'un axe sensiblement perpendiculaire au premier axe de rotation, et notamment passant par le centre de la couronne du premier arbre, et pourra venir au contact d'une face supérieure, ou inférieure, de la bande.

Avantageusement, le châssis, et notamment le premier organe de guidage, comporte un module de plaquage du patin sur ladite bande. Le module de plaquage est agencé pour exercer un effort sur le patin en direction de la bande. Selon un exemple, le patin pourra comporter une tige à l'extrémité de laquelle est formée une plaque, et le module de plaquage pourra comporter une pièce de guidage dans laquelle est engagée la tige du patin

Avantageusement, ladite couronne comporte au moins une nervure sur au moins une partie, notamment la totalité, de sa circonférence, la nervure formant l'élément mâle ainsi que le premier organe complémentaire, et en ce que le premier organe de guidage de rotation comporte une pièce montée rotative sur le châssis autour d'un axe sensiblement parallèle au premier axe et pourvue d'une gorge formant l'élément femelle. Le cas échéant, la nervure peut présenter un profil sensiblement complémentaire au profil de la gorge. Par exemple, la nervure et la gorge pourront chacune présenter un profil trapézoïdal, les faces obliques de la nervure venant en appui contre les faces obliques de la gorge de ladite pièce. En variante, ladite couronne comporte au moins une gorge sur au moins une partie, notamment la totalité, de sa circonférence, la gorge formant l'élément femelle ainsi que le premier organe complémentaire, et en ce que le premier organe de guidage de rotation comporte une pièce montée rotative sur le châssis autour d'un axe sensiblement parallèle au premier axe et pourvue d'une nervure formant l'élément mâle.

Selon un exemple de réalisation, la nervure pourra être une nervure centrale, positionnée au niveau d'une partie médiane de la surface externe de la couronne. Le cas échéant, la couronne pourra comporter une première pluralité de dents disposées au-dessus de la nervure centrale et une deuxième pluralité de dents disposées en-dessous de la nervure centrale. Selon un autre exemple de réalisation, la nervure pourra être une nervure désaxée, positionnée au niveau d'un bord supérieur ou inférieur de la surface externe de la couronne. Le cas échéant, la couronne pourra comporter deux nervures désaxées, positionnées respectivement au niveau d'un bord supérieur et inférieur de la surface externe de la couronne, la couronne comportant une pluralité de dents disposées entre les deux nervures, et chaque nervure étant engagée dans une gorge dédiée du premier organe de guidage en rotation.

Avantageusement, ladite pièce pourra comporter deux galets, notamment coniques, superposés et agencés pour définir un espace entre les galets formant ladite gorge. En variante, ladite pièce pourra comporter un roulement de type poulie à gorge.

Dans un mode de réalisation de l'invention alternatif ou cumulatif, ladite couronne comporte au moins une nervure sur au moins une partie, notamment la totalité, de sa circonférence, la nervure formant l'élément mâle ainsi que le premier organe complémentaire, et en ce que le premier organe de guidage de rotation comporte un patin de friction monté fixe sur le châssis et pourvue d'une gorge formant l'élément femelle.

Avantageusement, et quel que soit le mode de réalisation du premier organe de guidage en rotation envisagé, on pourra prévoir que l'organe de guidage en rotation soit fixé sur le châssis par vissage dans un trou oblong. De la sorte, la position du premier organe de guidage pourra être réglable.

On pourra envisager que le châssis comporte une pluralité de premiers organes de guidage en rotation chacun coopérant avec un premier organe complémentaire prévu sur le premier arbre, par exemple un premier organe de guidage comporte plusieurs patins en appui plan sur une bande montée sur la couronne ainsi que deux galets coniques superposés entre lesquels est logée une nervure périphérique de la couronne ainsi que deux autres premiers organes de guidage comportant chacun seulement deux galets coniques superposés entre lesquels est logée la nervure périphérique de la couronne. Le cas échéant, on pourra prévoir qu'une partie seulement de l'une et/ou seule l'une, voire certaines seulement, de ces paires premier organe de guidage - premier organe complémentaire, soit électriquement conductrice et/ou électriquement reliée à la source de puissance électrique et au propulseur.

Avantageusement, le véhicule propulsé comporte un deuxième organe de guidage en rotation du premier arbre autour dudit premier axe de rotation et le premier arbre comporte un deuxième organe complémentaire agencé pour coopérer mécaniquement avec le deuxième organe de guidage de sorte à supprimer au moins un degré de liberté du premier arbre, le deuxième organe de guidage et le deuxième organe complémentaire étant électriquement conducteurs et étant reliés électriquement l'un à l'autre, le deuxième organe de guidage étant relié électriquement à la source de puissance électrique et le deuxième organe complémentaire étant relié électriquement au propulseur. Selon cette caractéristique, il est possible faire transmettre un courant électrique, notamment alternatif ou continu, généré à partir de la source de puissance électrique au propulseur, la paire premier organe de guidage - premier organe complémentaire formant par exemple une borne de phase, ou une borne positive, et la paire deuxième organe de guidage - deuxième organe complémentaire formant par exemple une borne de neutre, ou une borne négative.

Dans l'un des modes de réalisation précédemment décrit, on pourra par exemple prévoir que le deuxième organe complémentaire comporte un premier palier monté sur l'autre des pivots du cadre du premier arbre, opposé au pivot formant l'organe de transmission, et le deuxième organe de guidage en rotation comporte un deuxième palier monté concentriquement autour de ce premier palier.

Dans l'autre des modes de réalisation précédemment décrit, on pourra par exemple prévoir que le deuxième organe complémentaire comporte une bande montée sur la couronne, sur une face opposée à la face sur laquelle est montée le premier organe complémentaire, et le deuxième organe de guidage en rotation comporte un patin en appui plan sur ladite bande de ce deuxième organe complémentaire. Le cas échéant, les patins des premier et deuxième organes de guidage en rotation pourront être en vis-à-vis les uns des autres. De préférence, les bandes pourront être assemblées de part et d'autre de la couronne au moyen d'une même vis, ladite vis étant équipée d'un organe isolant sur son pourtour. Cet organe isolant permet d'éviter un passage direct du courant d'une bande vers l'autre. En variante, on pourra prévoir que le deuxième organe complémentaire comporte une bande montée sur la couronne, sur la même face supportant le premier organe complémentaire, le deuxième organe complémentaire étant par exemple agencé concentriquement au premier organe complémentaire, c'est-à-dire radialement décalé vers l'intérieur ou l'extérieur vis-à-vis de ce premier organe complémentaire. Le cas échéant, le deuxième organe de guidage en rotation pourra comporter un patin en appui plan sur ladite bande de ce deuxième organe complémentaire.

Dans un mode de réalisation de l'invention, le véhicule propulsé comporte une unité centrale de contrôle du véhicule propulsé apte à échanger des données avec le propulseur. Le cas échéant, le véhicule propulsé peut comporter une pluralité de pieds fixes s'étendant depuis le châssis vers une embase commune et une pluralité de pieds mobiles s'étendant depuis une embase mobile, montée rotative sur l'embase commune autour du premier axe de rotation, vers le premier arbre, et un collecteur tournant est agencé dans l'embase commune et dans l'embase mobile, au moins un câble s'étendant depuis l'unité centrale de contrôle vers le collecteur tournant en passant dans l'un des pieds fixes et un autre câble s'étendant depuis le collecteur tournant vers le propulseur en passant dans l'un des pieds mobiles. Ce mode de réalisation est particulièrement avantageux dans le cas où le premier arbre est une couronne, dans la mesure où cet ensemble de pieds permet d'assurer le maintien du premier arbre sur le châssis, le premier arbre étant ainsi en suspension dans l'espace prévu dans le châssis et dans lequel le premier arbre peut tourner. On profite ainsi de cette structure de maintien tubulaire pour y faire passer des câbles afin d'assurer l'échange de données entre l'unité centrale de contrôle et le propulseur. L'embase commune et l'embase mobile forment une pièce commune creuse, dans laquelle est agencée le collecteur tournant. Ce type de collecteur tournant permettant une connexion électrique entre une partie fixe, au niveau de l'embase commune, et une partie tournante, au niveau de l'embase mobile, étant connu en soi, il ne sera pas décrit de façon plus détaillée.

De préférence, l'unité centrale de contrôle du véhicule propulsé pourra être apte à échanger des données avec un ou plusieurs capteurs du propulseur, comme une centrale inertielle, et/ou avec un variateur de vitesse d'un ou plusieurs moteurs du propulseur.

Avantageusement, les pieds fixes sont fixés au châssis en étant répartis sur tout le pourtour de l'espace du châssis dans lequel peut tourner le premier arbre autour du premier axe de rotation. Avantageusement toujours, les pieds mobiles sont fixés sur la couronne du premier arbre en étant répartis sur tout le pourtour de cette couronne. De préférence, les pieds fixes et mobiles sont agencés de sorte que l'embase commune et l'embase mobile surplombent la couronne en étant positionnés sur le premier axe de rotation.

Dans un autre mode de réalisation, on pourra prévoir que le châssis comporte un collecteur tournant dans le renfoncement du châssis recevant l'autre des pivots du cadre du premier arbre, opposé au pivot formant l'organe de transmission, et notamment au sein du premier palier monté sur cet autre pivot, au moins un câble s'étendant depuis l'unité centrale de contrôle vers le collecteur tournant en passant dans le châssis et un autre câble s'étendant depuis le collecteur tournant vers le propulseur en passant dans ledit premier palier et dans un conduit ménagé dans cet autre pivot et circulant dans le premier arbre.

Dans encore un autre mode de réalisation, on pourra prévoir qu'une face de la couronne, notamment la face opposée à la face sur laquelle est montée le premier organe complémentaire, comporte une ou plusieurs pistes électriques, par exemple circulaires, coopérant mécaniquement et électriquement avec un ou plusieurs connecteurs, par exemple des balais, prévus sur le châssis au droit de cette couronne. Le cas échéant, au moins un câble s'étend depuis l'unité centrale de contrôle vers ledit ou lesdits connecteurs et un autre câble s'étend depuis les pistes prévues sur la face de la couronne, vers le propulseur.

Dans encore un autre mode de réalisation, on pourra prévoir que l'un du châssis et du premier arbre comporte un émetteur et/ou un récepteur optique et que l'autre du châssis et du premier arbre comporte un récepteur et/ou un émetteur optique coopérant avec l'émetteur optique, respectivement le récepteur optique, Le cas échéant, au moins un câble s'étend depuis l'unité centrale de contrôle vers ledit émetteur et/ou récepteur du châssis et un autre câble s'étend depuis ledit émetteur et/ou récepteur du premier arbre , vers le propulseur.

Dans un mode de réalisation de l'invention, le véhicule propulsé comporte :
a. un deuxième arbre monté rotatif sur le premier arbre autour d'un deuxième axe de rotation, le deuxième arbre supportant ledit propulseur dudit véhicule propulsé ;
b. un deuxième dispositif d'entrainement en rotation du deuxième arbre autour dudit deuxième axe de rotation.

Le cas échéant, le premier arbre comporte un premier organe de guidage en rotation du deuxième arbre autour dudit deuxième axe de rotation et le deuxième arbre comporte un premier organe complémentaire agencé pour coopérer mécaniquement avec le premier organe de guidage du premier arbre de sorte à supprimer au moins un degré de liberté du deuxième arbre , le premier organe de guidage et le premier organe complémentaire étant électriquement conducteurs et étant reliés électriquement l'un à l'autre, le premier organe de guidage du premier arbre étant relié électriquement au premier organe complémentaire du premier arbre et le premier organe complémentaire du deuxième arbre étant relié électriquement au propulseur. Il est ainsi possible d'obtenir un véhicule propulsé omnidirectionnel, les rotations des premier et deuxième arbre permettant une orientation du véhicule propulsé dans toutes les directions, tout en conservant un encombrement limité. De préférence, le deuxième dispositif d'entrainement est relié électriquement au premier organe complémentaire du premier arbre.

De préférence, le deuxième arbre est monté sur le premier arbre de sorte que le deuxième axe de rotation soit sensiblement orthogonal au premier axe de rotation. Par exemple, le deuxième arbre pourra être supporté en deux points distincts du premier arbre, lesdits points définissant le deuxième axe de rotation, et le deuxième dispositif d'entrainement pourra être logé dans le premier arbre, au niveau d'un de ces points de support du deuxième arbre sur le premier arbre.

Avantageusement, le deuxième dispositif d'entrainement comporte un moteur équipé d'un axe rotatif autour du deuxième axe de rotation; le deuxième arbre comporte un organe de transmission relié mécaniquement à l'axe rotatif du moteur de sorte qu'une rotation de l'axe du moteur soit transmise au deuxième arbre; le premier organe complémentaire du deuxième arbre comporte un premier palier monté sur l'organe de transmission du deuxième arbre et le premier organe de guidage du premier arbre comporte un deuxième palier monté concentriquement autour du premier palier. Les caractéristiques relatives aux différents modes de réalisation relatifs au premier arbre et aux premier et deuxième paliers assurant le guidage en rotation du premier arbre et la transmission de la puissance électrique issue de la source de puissance électrique pourront être reprises, seules ou en combinaison, pour le deuxième arbre.

Avantageusement, le véhicule propulsé comportant une unité centrale de contrôle du véhicule propulsé apte à échanger des données avec le propulseur, le deuxième arbre comprend deux pivots diamétralement opposés et montés chacun pivotant dans un renfoncement du premier arbre, lesdits renfoncements se faisant face, l'organe de transmission du deuxième arbre est agencé sur l'un des pivots du deuxième arbre pour s'étendre dans un desdits renfoncements et l'axe rotatif du moteur s'étend dans ce renfoncement, un collecteur tournant est agencé dans l'autre des renfoncement du premier arbre, et au moins un câble s'étend depuis l'unité centrale de contrôle vers le collecteur tournant en passant dans le premier arbre et un autre câble s'étend depuis le collecteur tournant vers le propulseur en passant dans le deuxième arbre. De préférence, ledit collecteur tournant pourra être relié à l'unité centrale de contrôle du véhicule propulsé par exemple via le collecteur tournant prévu dans l'embase commune et l'embase mobile ou le collecteur tournant prévu dans le renfoncement du châssis

Selon un exemple de réalisation, la couronne du premier arbre comporte deux languettes orientées radialement vers l'intérieur de la couronne, les languettes étant diamétralement opposées, chaque languette recevant l'un des points de support du deuxième arbre sur le premier arbre. De préférence, le deuxième système d'entrainement pourra être monté sur l'une desdites languettes. Le cas échéant, ledit collecteur tournant pourra être monté sur l'autre desdites languettes. On pourra avantageusement prévoir que deux demi-coques de protection soient fixés de part et d'autre de chaque languette pour définir lesdits renfoncements du premier arbre.

Avantageusement, le deuxième arbre comporte une pièce centrale supportant le propulseur et deux tiges s'étendant, selon le deuxième axe de rotation, de part et d'autre depuis la pièce centrale vers un point de support du deuxième arbre sur le premier arbre.

De préférence, le propulseur comporte des hélices entrainées par un moteur en rotation autour d'un troisième axe de rotation perpendiculaire au deuxième axe de rotation.

Si on le souhaite, le deuxième arbre pourra supporter deux propulseurs montés de part et d'autre du deuxième arbre, chaque propulseur étant muni d'hélices, les hélices des propulseurs étant contrarotatives. L'emploi d'hélices contrarotatives permet de supprimer des effets gyroscopiques du véhicule propulsé.

Dans un mode de réalisation de l'invention, le véhicule propulsé est un drone aérien omnidirectionnel.

On pourra prévoir que le propulseur soit un propulseur à pâles ou à hélice, une turbine à réaction, et plus généralement n'importe quel type de propulseur dont l'orientation peut être contrôlée en le faisant pivoter et requérant une alimentation électrique, notamment pourvu d'un rotor et d'un stator.

La présente invention est maintenant décrite à l'aide d'exemples uniquement illustratifs et nullement limitatifs de la portée de l'invention, et à partir des dessins annexés, dessins sur lesquels les différentes figures représentent :
[Fig. 1] représente, schématiquement et partiellement, une vue en perspective d'un drone omnidirectionnel selon un premier mode de réalisation de l'invention ;
[Fig. 2] représente, schématiquement et partiellement, une vue de dessus d'un drone omnidirectionnel de la [Fig. 1] ;
[Fig. 3] représente, schématiquement et partiellement, une vue en perspective d'une partie du drone omnidirectionnel de la [Fig. 1] ;
[Fig. 4] représente, schématiquement et partiellement, une vue en perspective d'un ensemble d'organes de guidage en rotation et d'organes complémentaires du drone omnidirectionnel de la [Fig. 1] ;
[Fig. 5] représente, schématiquement et partiellement, une autre vue en perspective de la partie du drone omnidirectionnel de la [Fig. 3] ;
[Fig. 6A] représente, schématiquement et partiellement, une vue en coupe d'une liaison entre deux arbres du drone omnidirectionnel de la [Fig. 1] ;
[Fig. 6B] représente, schématiquement et partiellement, une vue en éclaté d'une autre liaison entre deux arbres du drone omnidirectionnel de la [Fig. 1] ;
[Fig. 7] représente, schématiquement et partiellement, une vue en perspective d'un drone omnidirectionnel selon un deuxième mode de réalisation de l'invention ;
Fig. 8] représente, schématiquement et partiellement, une vue en perspective d'une partie du drone omnidirectionnel de la [Fig. 1] ;
[Fig. 9A] représente, schématiquement et partiellement, une vue en coupe d'une liaison entre le châssis et un arbre du drone omnidirectionnel de la [Fig. 7] ; et
[Fig. 9B] représente, schématiquement et partiellement, une vue de face de la liaison de la [Fig. 9A].

Dans la description qui suit, les éléments identiques, par structure ou par fonction, apparaissant sur différentes figures conservent, sauf précision contraire, les mêmes références.

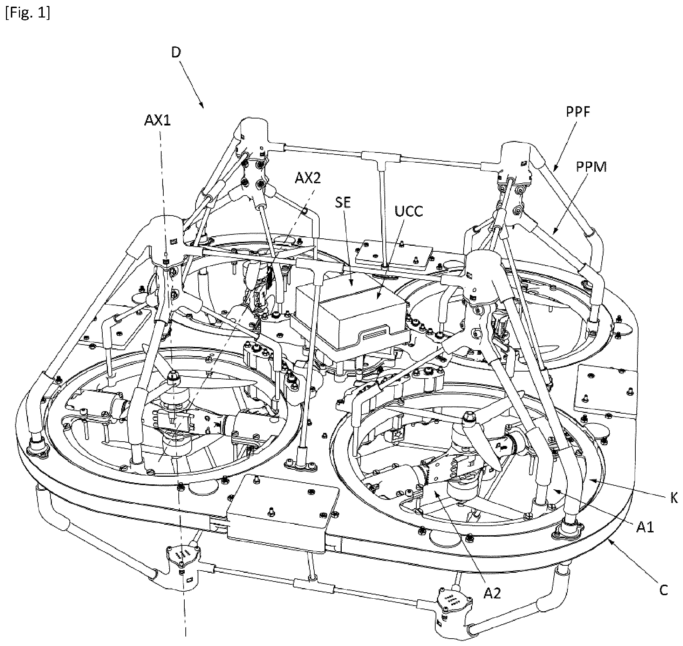

On a représenté en [Fig. 1] un véhicule propulsé, sous la forme d'un drone omnidirectionnel D, selon un premier mode de réalisation de l'invention.

Le drone D comporte un châssis C sur lequel sont disposés quatre espaces supportant chacun un premier arbre A1 comprenant une couronne K en forme de révolution autour d'un premier axe de rotation AX1 et montée rotative autour dudit premier axe AX1. Chaque couronne K supporte un deuxième arbre A2 monté rotatif autour d'un deuxième axe AX2, orthogonal au premier axe AX1, et sur lequel est monté un propulseur P comportant notamment une double hélice contrarotative. Au centre du châssis C est supportée une unité centrale de contrôle UCC apte notamment à commander les vitesses des rotations des propulseurs P et une batterie électrique SE agencée notamment pour alimenter le système de propulsion du drone C. Le châssis C comporte également un premier système d'entraine-ment E1 pour chaque premier arbre A1 qui est monté sur le châssis C.

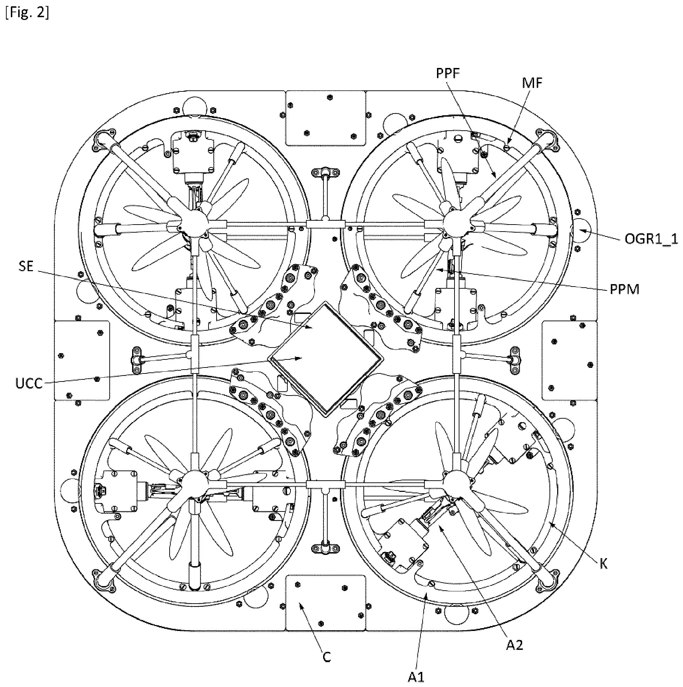

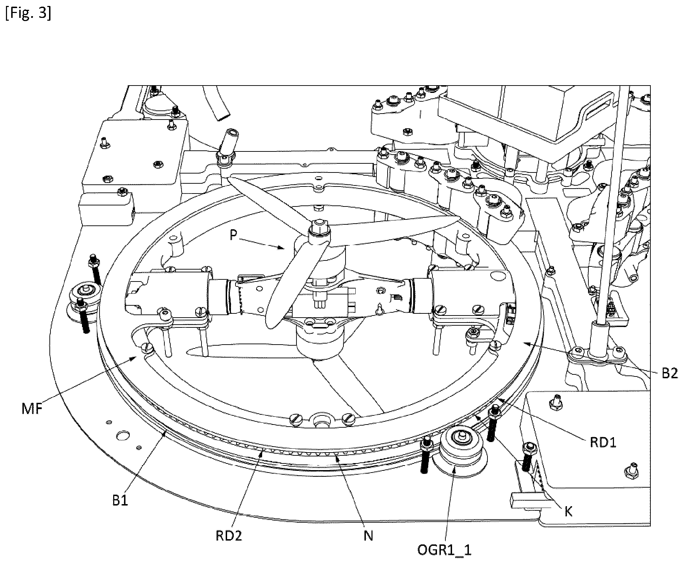

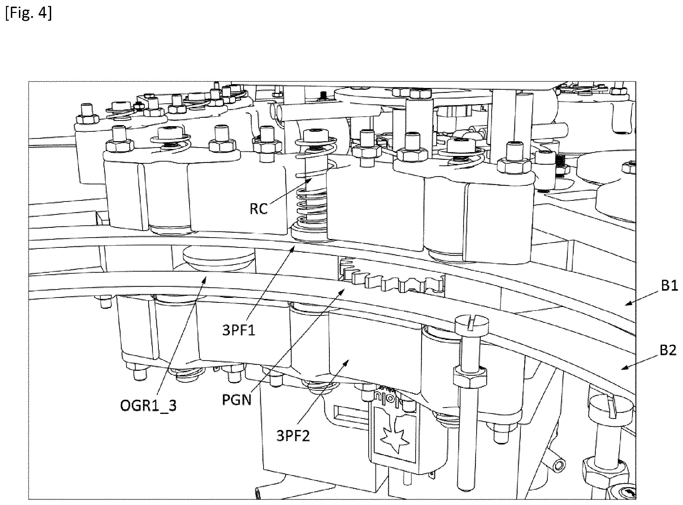

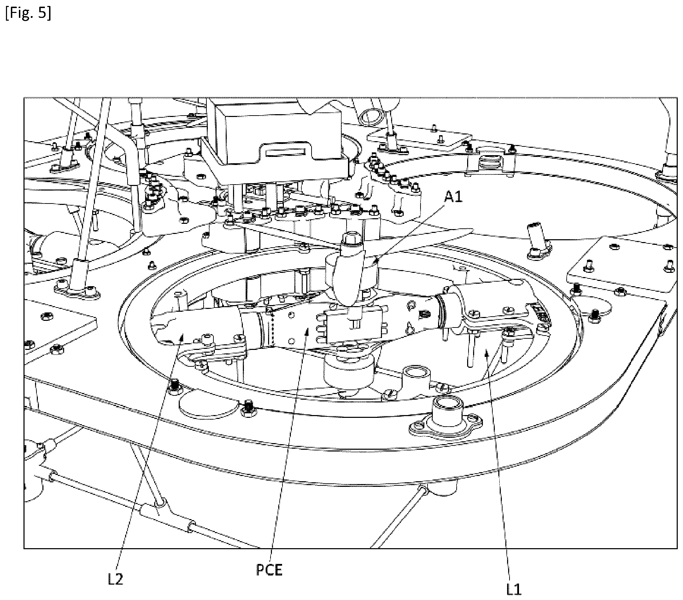

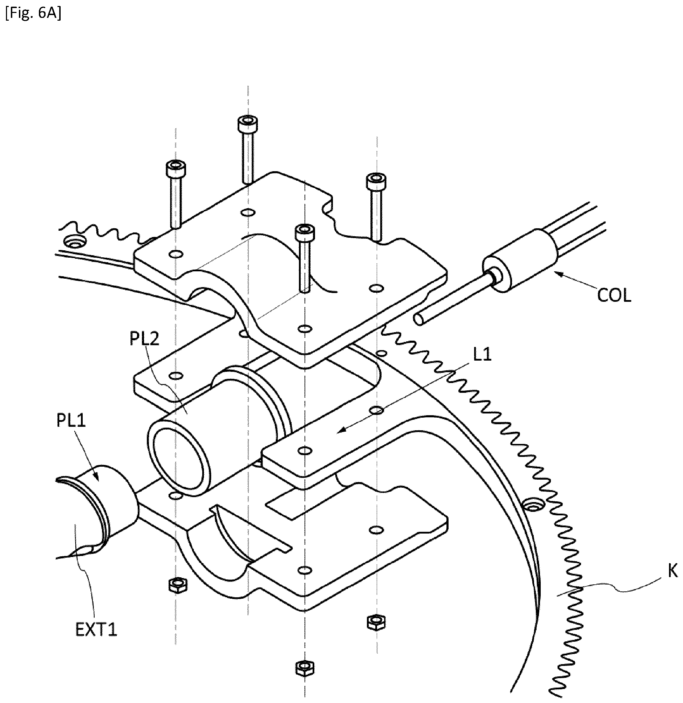

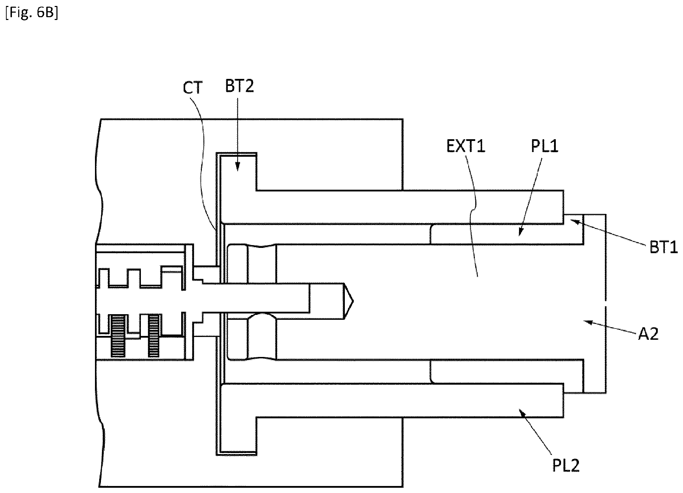

On a représenté en [Fig. 2] une vue de dessus du drone omnidirectionnel D. La [Fig. 3] représente une vue en perspective d'un ensemble premier arbre-deuxième arbre-propulseur A1-A2-P du drone omnidirectionnel de la [Fig. 1]. La [Fig. 4] représente une vue en perspective d'un ensemble d'organes de guidage en rotation et d'organes complémentaires de l'ensemble de la [Fig. 3]. La [Fig. 5] représente une autre vue en perspective de l'ensemble premier arbre-deuxième arbre-propulseur A1-A2-P de la [Fig. 3]. La [Fig. 6A] représente une vue en coupe d'une liaison entre le premier arbre A1 et le deuxième arbre A2 de l'ensemble de la [Fig. 3]. Et la [Fig. 6B] représente un éclaté d'une autre liaison entre le premier arbre A1 et le deuxième arbre A2 de l'ensemble de la [Fig. 3]. Dans la suite, seul l'un de ces ensembles sera décrits, étant entendu que les quatre ensembles visibles en [Fig. 1] et [Fig. 2] sont identiques.

Le drone D comporte une pluralité de pieds fixes PPF s'étendant depuis le châssis C vers une embase commune supportée par le châssis C à laquelle ils sont fixés et une pluralité de pieds mobiles PPM s'étendant depuis une embase mobile, montée rotative sur l'embase commune autour du premier axe de rotation AX1. Les pieds mobiles PPM sont fixés au premier arbre A1, en étant répartis sur toute sa circonférence. On note ainsi que le premier arbre A1 est ainsi en suspension dans l'espace qui lui est réservé, tout en restant mobile en rotation autour du premier axe de rotation AX1.

Comme représenté en [Fig. 3], la couronne K comporte une première pluralité de dents RD1 sur toute sa circonférence, agencée au niveau d'un rebord supérieur de la couronne K et une deuxième pluralité de dents RD2 sur toute sa circonférence, agencée au niveau d'un rebord inférieur de la couronne K.

Le premier système d'entrainement E1 comporte un moteur entrainant un pignon PGN, visible en [Fig. 4]. Ce pignon PGN comporte deux régions dentées, parallèles entre elles, et disposées sur toute la partie d'un rebord supérieur de la circonférence du pignon PGN et sur toute la partie inférieure d'un rebord de la circonférence du pignon. Chacune de ces deux régions dentées sont agencées pour s'engrener avec la pluralité de dents supérieure et inférieure RD1 et RD2 de la couronne K de sorte que la rotation du pignon PGN engendrée par le moteur soit transmise à la couronne K et par conséquent à l'arbre A1. On note ainsi que l'arbre A1 pivote autour de l'axe de rotation AX1 qui est identique à l'axe de révolution de la couronne K.

La couronne K comporte une nervure centrale N sur toute la partie médiane de sa circonférence, agencée entre la première et la deuxième pluralité de dents RD1 et RD2. Le châssis C comporte deux premiers organes OGR1_1 de guidage en rotation du premier arbre A1 autour du premier axe de rotation AX1. Ces organes OGR1_1 sont réalisés chacun sous la forme d'un roulement à gorge dont le profil est complémentaire à la géométrie de la nervure N. La nervure N vient se loger dans la gorge de chaque roulement OGR1_1, formant ainsi un premier organe complémentaire OC1_1 coopérant mécaniquement avec les premiers organes de guidage OGR1_1. Dans l'exemple décrit, la nervure N et la gorge de chaque roulement OGR1_1 présentent un profil trapézoïdal, les faces obliques de la nervure N venant en appui contre les faces obliques de cette gorge.

Comme représenté en [Fig. 3], la couronne K du premier arbre A1 est encadrée par deux bagues parallèles, B1 et B2, rapportées sur les faces supérieure et inférieure de la couronne K. Ces bagues B1 et B2 sont de forme de révolution autour de l'axe AX1 et montées solidaires sur la couronne K au travers de moyens de fixation MF sur différents points du premier arbre A1. Dans l'exemple décrit, les moyens de fixations sont réalisés sous forme de vis visées à travers chacune des bandes B1 et B2 et de la couronne K.

Comme représenté en [Fig. 4], le châssis C comporte un autre premier organe OGR1_2 de guidage en rotation du premier arbre A1 autour du premier axe de rotation AX1. Cet organe comporte une pluralité de patins de friction 3PF1, réalisés sous forme de trois patins successifs. Ces patins 3PF1 sont en appui plan contre la bague supérieure B1, qui forme ainsi un autre premier organe complémentaire OC1_2 coopérant avec l'autre premier organe de guidage en rotation OGR1_2.

Chaque patin de friction 3PF1 comporte une tige et une plaque prévue à l'extrémité de la tige pour venir en appui plan contre la bague supérieure B1. La tige est montée dans un cylindre de guidage et un ressort de compression RC est agencé autour de la tige pour venir en butée d'une part contre une paroi supérieure du cylindre de guidage et d'autre part contre la plaque du patin. Chaque patin 3PF1 exerce ainsi une force dans une direction perpendiculaire à la surface de la bague B1 orientée vers la bague B2.

De façon symétrique, le châssis C comporte un deuxième organe de guidage en rotation OGR2 comportant une pluralité de patins de friction 3PF2, disposés en vis-à-vis des patins 3PF1. Ces patins 3PF2 sont en appui plan contre la bague inférieure B2, qui forme ainsi un deuxième organe complémentaire OGR2 coopérant avec le deuxième organe de guidage en rotation OGR2.

Ainsi, le premier arbre A1 est guidée en rotation simultanément par les premiers organes de guidage OGR1_1 et OGR1_2 et par le deuxième organe de guidage OGR2.

On notera la présence d'un troisième roulement à gorge OGR1_3, prévu à l'arrière des patins de friction 3PF1 et 3PF2, coopérant avec la nervure N de la couronne K.

Comme représenté en [Fig. 3], les bagues B1 et B2 sont réalisées dans un matériau électriquement conducteur, en l'occurrence en aluminium. De même, les patins de friction 3PF1 et 3PF2 sont réalisés dans un matériau électriquement conducteur, en l'occurrence en bronze.

Chaque bague B1 et B2 est ainsi reliée à la batterie SE du drone D par contact électrique avec les patins de friction, 3PF1 et 3PF2. Chaque patin 3PF1 et 3PF2 est relié électriquement à la batterie SE par un câble, notamment soudé sur la tige de ce patin, ce câble passant par exemple dans des réservations ménagées dans le châssis C et/ou entre deux couches internes de ce châssis C. Chaque bague B1 et B2 est reliée électriquement au propulseur P, comme cela sera décrit ultérieurement. La coopération mécanique des bagues B1 et B2 avec les patins de friction 3PF1 et 3PF2 permet ainsi de transmettre la puissance électrique développée par la batterie SE au propulseur P. L'une des bandes B1 peut en outre servir de borne positive ou de borne de phase et l'autre bandes B2 peut ainsi servir de borne négative ou de borne neutre, selon que la source de puissance électrique SE délivre un courant continu ou un courant alternatif.

Comme représenté en [Fig. 5] et [Fig. 6B], la couronne K du premier arbre A1 comporte deux languettes L1 et L2 orientées radialement vers l'intérieur de la couronne K, les languettes étant diamétralement opposées. Chaque languette L1 et L2 définit ainsi un renfoncement recevant l'une des extrémités EXT1 et EXT2 du deuxième arbre A2 de sorte que cette extrémité soit en liaison pivot avec ce renfoncement. Les languettes L1 et L2 définissent ainsi le deuxième axe de rotation AX2. Dans l'exemple décrit, chaque languette comporte une demi-coque supérieure et une demi-coque inférieure (visibles en [Fig. 6A]), les demi-coques définissant ensemble le logement de réception d'une extrémité de l'arbre A2.

Comme montré en [Fig. 6A], au niveau de la languette L1 et d'une première extrémité EXT1 du deuxième arbre A2, le premier arbre A1 supporte un deuxième système d'entrainement E2 apte à faire pivoter le deuxième arbre A2 autour du deuxième axe de rotation AX2. Le deuxième système d'entrainement E2 comporte un cylindre de transmission CT à section polygonale, réalisé ici hexagonale, et entrainé par un moteur, engagé dans un orifice OR prévu dans la première extrémité EXT1 du deuxième arbre A2, de section complémentaire à celle du cylindre de transmission CT. On notera que cette première extrémité EXT1 forme ainsi un organe de transmission de la rotation du moteur du deuxième système d'entraine-ment E2 au deuxième arbre A2.

Comme représenté en [Fig. 6A] et [Fig. 6B], le deuxième arbre A2 comporte, à chacune de ses extrémités EXT1 et EXT2, un premier palier PL1, en l'espèce un manchon, dans lequel est emmanchée, de façon fixe, cette extrémité. Le premier arbre A2 comporte, pour chaque languette L1 et L2, un deuxième palier PL2, également réalisé sous la forme d'un manchon, agencé de façon libre dans le renfoncement défini par cette languette. Le deuxième palier PL2 est agencé concentriquement autour du premier palier PL1, la surface intérieure du deuxième palier PL2 et la surface extérieure du premier palier PL1 étant lisses et en contact direct l'une avec l'autre. Le deuxième palier PL2 de la languette L1 forme ainsi un premier organe de guidage en rotation DOGR_1 du deuxième arbre A2 et le premier palier PL1 de l'extrémité EXT1 forme ainsi un premier organe complémentaire DOC_1 coopérant mécaniquement avec le premier organe DOGR_1, tandis que le deuxième palier PL2 de la languette L2 forme un deuxième organe de guidage en rotation DOGR_2 du deuxième arbre A2 et le premier palier PL1 de l'extrémité EXT2 forme ainsi un deuxième organe complémentaire DOC_2 coopérant mécaniquement avec le deuxième organe DOGR_2.

Chaque premier palier PL1 et chaque deuxième palier PL2 est fabriqué en un matériau électriquement conducteur, notamment en bronze fritté et imprégné ou revêtu avec de la graisse électriquement conductrice. Pour chaque extrémité EXT1 et EXT2, un câble (non représenté) relié électriquement au propulseur P est soudé au premier palier PL1, tandis qu'un autre câble relié électriquement à la bague supérieure B1, respectivement inférieure B2, est soudé au deuxième palier PL2. La puissance électrique délivrée par la batterie SE peut ainsi être transmise au propulseur P par l'intermédiaire des patins 3PF1 et 3PG2, des bagues B1 et B2, des premiers paliers PL1 et des deuxièmes paliers PL2.

Chaque deuxième palier PL2 comporte une butée périphérique BT2 formée au niveau d'un bord du deuxième palier PL2, et le renfoncement de chaque languette L1 et L2 comporte une gorge périphérique GP, visible en [Fig. 6A] et [Fig. 6B], dans laquelle est logée la butée BT2 périphérique du deuxième palier PL2. Le premier palier PL1 comporte une butée périphérique BT1 formée au niveau d'un bord du premier palier PL1, cette butée BT2 étant enserrée entre une paroi du second arbre A2 et un bord du deuxième palier PL2.

Le deuxième arbre A2 comporte une pièce centrale PCE, visible en [Fig. 5], supportant le propulseur (P) et deux tiges s'étendant, selon le deuxième axe de rotation A2, de part et d'autre depuis la pièce centrale PCE pour former les extrémités EXT1 et EXT2.

Enfin, un collecteur tournant (non représenté) est agencé dans l'embase commune et dans l'embase mobile reliant les pieds fixes PPF aux pieds mobiles PPM, tandis qu'un autre collecteur tournant COL est agencé dans le renfoncement de la languette L2 du premier arbre A1 recevant la deuxième extrémité EXT2 du deuxième arbre.

Au moins un câble (non représenté) relie l'unité centrale de contrôle UCC à ce collecteur tournant en passant dans l'un des pieds fixes PPF, tandis qu'un autre câble s'étend depuis ce collecteur tournant vers l'autre collecteur tournant COL en passant dans l'un des pieds mobiles PPM et dans le premier arbre A1, par exemple dans une réservation de la couronne K. Enfin, un câble relie ce collecteur tournant COL au propulseur P en passant dans une réservation prévue dans le deuxième arbre A2.

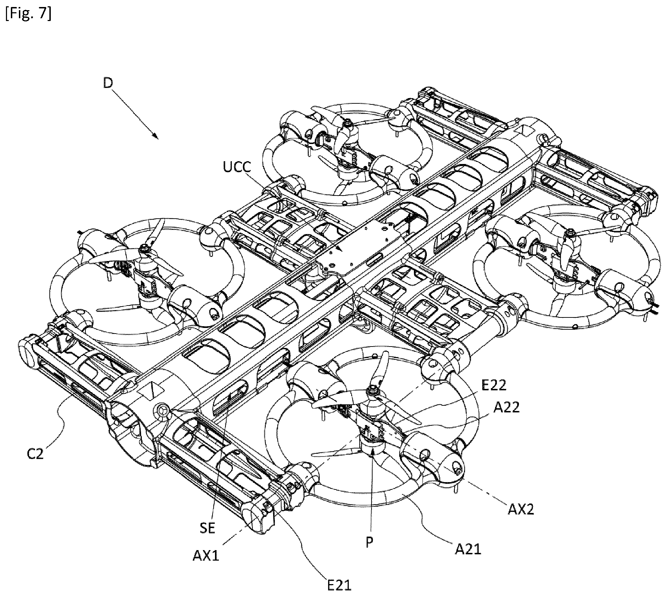

On a représenté en [Fig. 7] un drone omnidirectionnel D2 selon un premier mode de réalisation de l'invention.

Le drone D2 comporte un châssis C2 sur lequel sont disposés quatre espaces supportant chacun un premier arbre A21 monté rotatif sur le châssis C2 autour d'un premier axe de rotation AX1. Chaque premier arbre A21 supporte un deuxième arbre A22 monté rotatif autour d'un deuxième axe AX2, orthogonal au premier axe AX1, et sur lequel est monté un propulseur P comportant notamment une double hélice contrarotative. Au centre du châssis C2 est supportée une unité centrale de contrôle UCC apte notamment à commander les vitesses des rotations des propulseurs P et une batterie électrique SE agencée notamment pour alimenter le système de propulsion du drone D2. Le drone D2 comporte également un premier système d'entrainement E21 pour entrainer en rotation chaque premier arbre A21 autour du premier axe AX1 et un deuxième système d'entrainement E22 pour entrainer chaque deuxième arbre A22 autour du deuxième axe AX2.

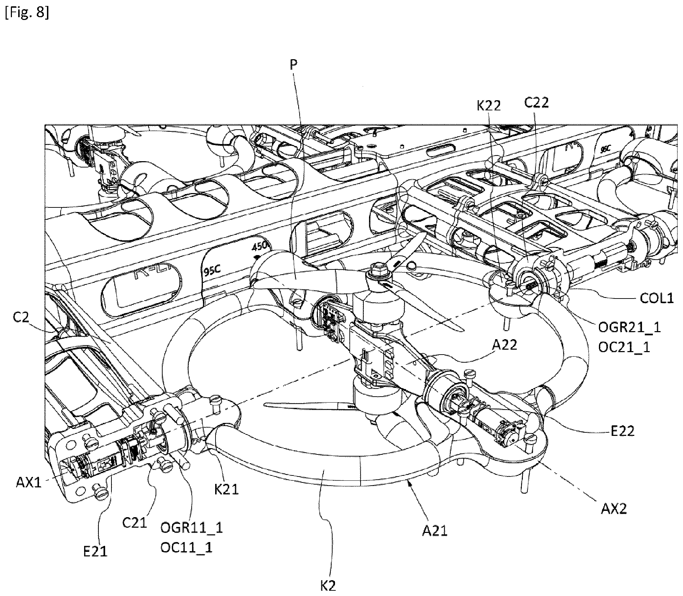

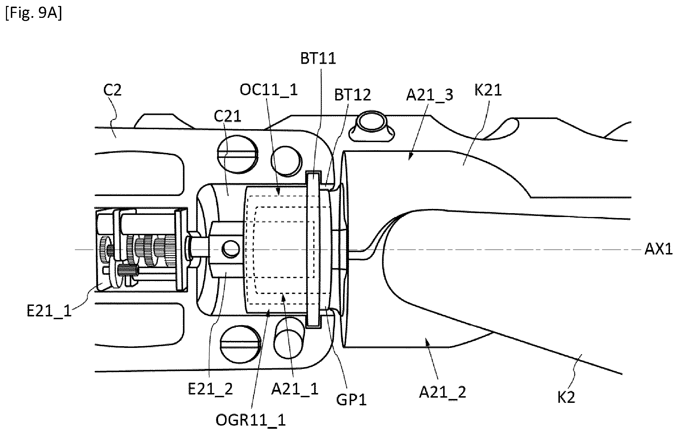

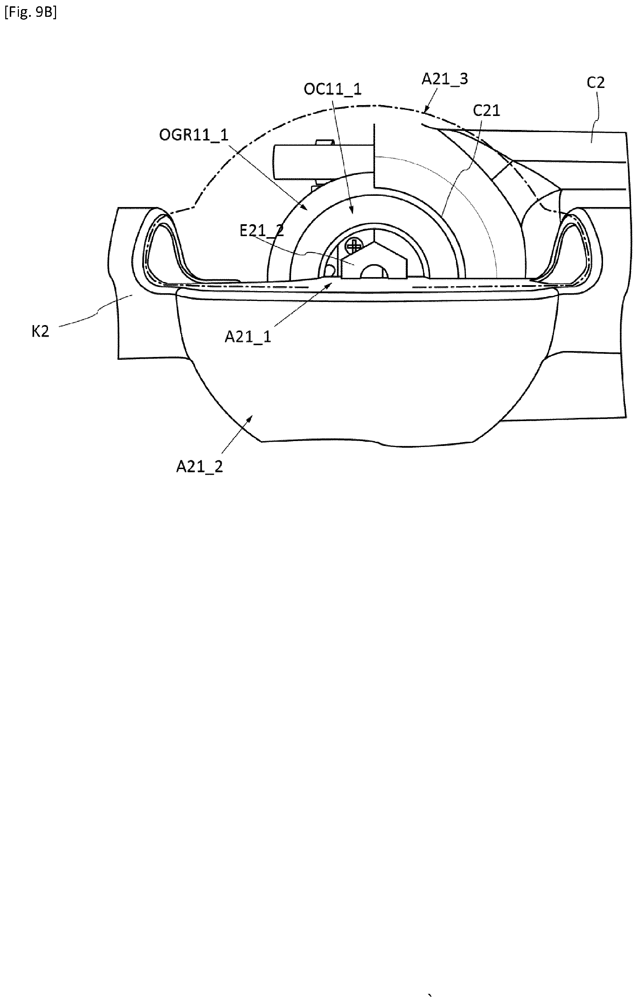

La [Fig. 8] représente une vue en perspective d'un ensemble premier arbre-deuxième arbre-propulseur A21-A22-P du drone omnidirectionnel de la [Fig. 7]. La [Fig. 9A] représente une vue en coupe d'une liaison entre le châssis C2 et le premier arbre A22 de l'ensemble de la [Fig. 8]. Et la [Fig. 9B] représente une vue de face de cette liaison. Dans la suite, seul l'un de ces ensembles sera décrits, étant entendu que les quatre ensembles visibles en [Fig. 7] sont identiques.

Comme montré en [Fig. 8], le premier arbre A21 comporte un cadre K2 de forme oblongue comprenant deux pivots K21 et K22 diamétralement opposés et montés chacun pivotant dans un renfoncement C21 et C22 du châssis C2, lesdits renfoncements se faisant face. Ces renfoncements C21 et C22 définissent ainsi le premier axe de rotation AX1.

Comme montré en [Fig. 9A] et [Fig. 9B], le premier dispositif d'entrainement E21 est logé dans le châssis C2, au niveau de l'un de ces renfoncements C21. Le premier dispositif d'en-trainement E21 comporte un moteur E21_1 équipé d'un axe rotatif autour du premier axe de rotation AX1, sur lequel est monté un cylindre de transmission E21_2. Le cylindre de transmission E21_1 est à section hexagonale et est engagé dans un orifice d'un organe de transmission A21_1 du premier arbre A21, réalisée par deux demi-coques A21_2 et A21_3 (en ligne pointillée sur la [Fig. 9B]) prévues sur une extrémité du premier arbre A21 et formant ensemble le pivot K21. La demi-coque A21_2 est reliée au reste du premier arbre A21, et chaque demi-coque comporte une rainure, les rainures venant en vis-à-vis l'une de l'autre, lorsque les demi-coques sont assemblées, pour former l'orifice de l'organe de transmission A21_1 dans lequel s'insère le cylindre de transmission E21_2.

Comme montré en [Fig. 9A], un taraudage est prévu dans le cylindre de transmission E21_2 pour recevoir une vis de pression permettant de solidariser le cylindre de transmission E21_2 à l'axe rotatif du moteur E21_1, et ainsi de transmettre une rotation de l'axe du moteur E21_2 au premier arbre A21 via l'organe de transmission A21_1.

On notera qu'une partie de l'organe de transmission A21_1 s'étend dans le renfoncement C21.

Le châssis C2 comporte un premier organe de guidage en rotation OGR11_1 du premier arbre A21 autour dudit premier axe de rotation AX1 et le premier arbre A21 comporte un premier organe complémentaire OC11_1 agencé pour coopérer mécaniquement avec le premier organe de guidage OGR11_1 de sorte à supprimer au moins un degré de liberté du premier arbre A21.

Dans l'exemple décrit, le premier organe complémentaire OC11_1 est un premier palier monté sur la partie de l'organe de transmission A21_1 s'étendant dans le renfoncement C21, tandis le premier organe de guidage en rotation OGR11_1 est un deuxième palier monté concentriquement autour du premier palier OC11_1.

Le premier palier OC11_1 est un manchon d'axe longitudinal sensiblement identique au premier axe de rotation AX1 et monté de façon fixe sur l'organe de transmission A21_1 du premier arbre A21 qui est emmanché dans ce premier palier OC11_1. Le deuxième palier OGR11_1 est un manchon d'axe longitudinal sensiblement identique au premier axe de rotation AX1, monté de façon libre dans le renfoncement C21. La surface intérieure du deuxième palier OGR11_1 et la surface extérieure du premier palier OC11_1 sont lisses et sont en contact direct l'une avec l'autre.

Le deuxième palier OGR11_1 comporte une butée périphérique BT11 s'étendant sur tout son pourtour au niveau d'un de ses bords. Le renfoncement C21 comporte une gorge périphérique GP1 dans laquelle est logée la butée périphérique BT11 du deuxième palier OGR11_1. Le premier palier OC11_1 comporte une butée périphérique BT12 s'étendant sur tout son pourtour au niveau d'un de ses bords. La butée périphérique BT12 du premier palier OC11_1 est enserrée entre la butée périphérique BT11 du deuxième palier OGR11_1 et un rebord de l'organe de transmission A21_1 du premier arbre A21.

Chacun des premier et deuxième paliers OC11_1 et OGR11_1 est réalisé dans un matériau électriquement conducteur, en l'espèce en bronze.

Le deuxième palier OGR11_1 est relié électriquement à la batterie SE par un câble, notamment soudé sur ce palier, ce câble passant à l'intérieur de la structure du châssis C2. Le premier palier OC11_1 est relié électriquement au propulseur P, comme cela sera décrit ultérieurement.

Comme montré en [Fig. 8], on notera que le châssis comporte, dans le renfoncement C22, un deuxième organe de guidage en rotation OGR21_1 du premier arbre A21 autour dudit premier axe de rotation AX1, formé sous la forme d'un palier identique au deuxième palier OGR11_1 et que le premier arbre A21 comporte, au niveau du pivot K22, un deuxième organe complémentaire OC21_1, réalisé sous la forme d'un palier identique au premier palier OC11_1, agencé pour coopérer mécaniquement avec le deuxième organe de guidage OGR21_1. Ces paliers OGR21_1 et OC21_1 sont également réalisés en bronze, de sorte que l'un des pivots K21 et K22 puisse servir de borne positive ou de borne de phase et de sorte que l'autre des pivots K21 et K22 puisse servir de borne négative ou de borne neutre, selon que la source de puissance électrique SE délivre un courant continu ou un courant alternatif.

On notera enfin que le châssis C2 comporte un collecteur tournant COL1 dans le renfoncement C22 auquel est relié au moins un câble s'étendant depuis l'unité centrale de contrôle UCC et un autre câble relié au propulseur P en passant dans ledit palier OC21_1 et dans un conduit ménagé dans le premier arbre A21.

La structure du deuxième arbre A22 et la structure de sa liaison au première arbre A21 sont sensiblement identiques à celles du premier mode de réalisation, telles que décrites en [Fig. 6A] et [Fig. 6B], et ne seront donc pas décrites de nouveau.

On notera que l'invention a été décrite dans le cadre d'un drone aérien omnidirectionnel, mais peut s'étendre à d'autres types de drones, comme un drone sous-marin ou AUV, ou encore à d'autres types de véhicules propulsés, pouvant être ou non pilotables à distance voir autonomes, semi-autonomes ou manuels, comme une voiture, une moto, un camion, un vélo, un train, un avion, un hélicoptère, un navire.

La description qui précède explique clairement comment l'invention permet d'atteindre les objectifs qu'elle s'est fixée, à savoir incorporer une solution peu encombrante de transmission de la puissance électrique fournie par une source d'énergie montée sur le châssis au propulseur d'un véhicule propulsé, notamment d'un drone omnidirectionnel, en proposant de tirer parti des organes de guidage en rotation des arbres rotatifs de ce véhicule, en leur conférant une deuxième fonction de transmission d'une puissance électrique.

En tout état de cause, l'invention ne saurait se limiter aux modes de réalisation spécifiquement décrits dans ce document. L'étendue de l'invention revendiquée est définie par les revendications ci-dessous. On pourra en particulier envisager d'autres matériaux de constructions, notamment des matériaux conducteurs d'un courant électrique ainsi que des organes de guidage magnétiques, notamment des électroaimants. De même, un nombre arbitraire de propulseurs pourront être montés rotatifs sur les deuxièmes arbres de sorte à moduler la force de poussée totale du drone et, par ce biais, la vitesse maximale atteignable dudit drone.

## Revendications

1. Véhicule propulsé (D1 ; D2) comportant :
a. une source de puissance électrique (SE),
b. un châssis (C) supportant la source de puissance électrique,
c. un premier arbre (A1) supportant un propulseur (P) dudit véhicule propulsé, monté rotatif sur le châssis autour d'un premier axe de rotation (AX1), et
d. un premier dispositif d'entrainement (E1) en rotation du premier arbre autour dudit premier axe de rotation,
tel que le châssis comporte un premier organe de guidage (OGR1) en rotation du premier arbre autour dudit premier axe de rotation et tel que le premier arbre comporte un premier organe complémentaire (OC1) agencé pour coopérer mécaniquement avec le premier organe de guidage de sorte à supprimer au moins un degré de liberté du premier arbre , tel que le premier organe de guidage et le premier organe complémentaire sont électriquement conducteurs et sont reliés électriquement l'un à l'autre, le premier organe de guidage étant relié électriquement à la source de puissance électrique et le premier organe complémentaire étant relié électriquement au propulseur.

2. Véhicule propulsé (D1 ; D2) selon la revendication précédente, dans lequel le premier dispositif d'entrainement (E1) comporte un moteur équipé d'un axe rotatif autour du premier axe de rotation (AX1); dans lequel le premier arbre (A1) comporte un organe de transmission relié mécaniquement à l'axe rotatif du moteur de sorte qu'une rotation de l'axe du moteur soit transmise au premier arbre; dans lequel le premier organe complémentaire (OC1) comporte un premier palier (PL1) monté sur l'organe de transmission et dans lequel le premier organe de guidage en rotation (OGR1) comporte un deuxième palier monté concentriquement autour du premier palier.

3. Véhicule propulsé (D1 ; D2) selon la revendication précédente, dans lequel le premier arbre (A1) comporte un cadre comprenant deux pivots diamétralement opposés et montés chacun pivotant dans un renfoncement du châssis (C), lesdits renfoncements se faisant face, dans lequel l'organe de transmission est agencé sur l'un des pivots pour s'étendre dans un desdits renfoncements et l'axe rotatif du moteur s'étend dans ce renfoncement et dans lequel le premier palier (PL1) est agencé dans ce renfoncement, le profil du renfoncement correspondant sensiblement à celui du deuxième palier (PL2).

4. Véhicule propulsé (D1 ; D2) selon la revendication 1, dans lequel le premier arbre (A1) comprend une couronne de forme de révolution autour du premier axe (AX1) de rotation, dans lequel le premier organe complémentaire (OC1) comporte une bande montée sur la couronne et dans lequel le premier organe de guidage en rotation (OGR1) comporte un patin en appui plan sur ladite bande (B1).

5. Véhicule propulsé (D1 ; D2) selon la revendication précédente, **caractérisé en ce que** le châssis (C) comporte un module de plaquage (3PF1) du patin sur ladite bande (B1).

6. Véhicule propulsé (D1 ; D2) selon l'une des revendications précédentes, **caractérisé en ce qu'**il comporte un deuxième organe de guidage en rotation (OGR2) du premier arbre autour dudit premier axe de rotation (AX1) et **en ce que** le premier arbre (A1) comporte un deuxième organe complémentaire (OC2) agencé pour coopérer mécaniquement avec le deuxième organe de guidage (OGR1) de sorte à supprimer au moins un degré de liberté du premier arbre , **en ce que** le deuxième organe de guidage et le deuxième organe complémentaire sont électriquement conducteurs et sont reliés électriquement l'un à l'autre, le deuxième organe de guidage étant relié électriquement à la source de puissance électrique (SE) et le deuxième organe complémentaire étant relié électriquement au propulseur (P).

7. Véhicule propulsé (D1; D2) selon l'une des revendications précédentes, le véhicule propulsé comportant une unité centrale de contrôle (UCC) du véhicule propulsé apte à échanger des données avec le propulseur (P), dans lequel le véhicule propulsé comporte une pluralité de pieds fixes (PPF) s'étendant depuis le châssis (C) vers une embase commune et une pluralité de pieds mobiles (PPM) s'étendant depuis une embase mobile, montée rotative sur l'embase commune autour du premier axe de rotation, vers le premier arbre (A1), dans lequel un collecteur tournant (COL) est agencé dans l'embase commune et dans l'embase mobile et dans lequel au moins un câble s'étend depuis l'unité centrale de contrôle vers le collecteur tournant en passant dans l'un des pieds fixes et dans lequel un autre câble s'étend depuis le collecteur tournant vers le propulseur en passant dans l'un des pieds mobiles.

8. Véhicule propulsé (D1; D2) selon l'une des revendications précédentes, **caractérisé en ce qu'**il comporte :
a. un deuxième arbre (A2) monté rotatif sur le premier arbre (A1) autour d'un deuxième axe de rotation (AX2), le deuxième arbre supportant ledit propulseur (P) dudit véhicule propulsé ;
b. un deuxième dispositif d'entrainement en rotation (E2) du deuxième arbre autour dudit deuxième axe de rotation,
**caractérisé en ce que** le premier arbre comporte un premier organe de guidage en rotation (OGR1) du deuxième arbre autour dudit deuxième axe de rotation et **en ce que** le deuxième arbre comporte un premier organe complémentaire (OC1) agencé pour coopérer mécaniquement avec le premier organe de guidage du premier arbre de sorte à supprimer au moins un degré de liberté du deuxième arbre , **en ce que** le premier organe de guidage et le premier organe complémentaire sont électriquement conducteurs et sont reliés électriquement l'un à l'autre, le premier organe de guidage du premier arbre étant relié électriquement au premier organe complémentaire du premier arbre et le premier organe complémentaire du deuxième arbre étant relié électriquement au propulseur

9. Véhicule propulsé (D1 ; D2) selon la revendication précédente, dans lequel le deuxième dispositif d'entrainement (E2) comporte un moteur équipé d'un axe rotatif autour du deuxième axe de rotation; dans lequel le deuxième arbre (A2) comporte un organe de transmission relié mécaniquement à l'axe rotatif du moteur de sorte qu'une rotation de l'axe du moteur soit transmise au deuxième arbre; dans lequel le premier organe complémentaire (OC1) du deuxième arbre comporte un premier palier (PL1) monté sur l'organe de transmission du deuxième arbre et dans lequel le premier organe de guidage (OGR1) du premier arbre (A1) comporte un deuxième palier (PL 2) monté concentriquement autour du premier palier

10. Véhicule propulsé (D1 ; D2) selon la revendication précédente, le véhicule propulsé comportant une unité centrale de contrôle (UCC) du véhicule propulsé apte à échanger des données avec le propulseur (P), dans lequel le deuxième arbre (A2) comprend deux pivots diamétralement opposés et montés chacun pivotant dans un renfoncement du premier arbre (A1), lesdits renfoncements se faisant face, dans lequel l'organe de transmission du deuxième arbre est agencé sur l'un des pivots du deuxième arbre pour s'étendre dans un desdits renfoncements et l'axe rotatif du moteur s'étend dans ce renfoncement, dans lequel un collecteur tournant (COL) est agencé dans l'autre des renfoncement du premier arbre, et dans lequel au moins un câble s'étend depuis l'unité centrale de contrôle vers le collecteur tournant en passant dans le premier arbre et dans lequel un autre câble s'étend depuis le collecteur tournant vers le propulseur en passant dans le deuxième arbre.

11. Véhicule propulsé (D1 ; D2) selon l'une des revendications précédentes, **caractérisé en ce qu'**il est un drone aérien omnidirectionnel.

## Patentansprüche

1. Angetriebenes Fahrzeug (D1 ; D2), aufweisend:
a. eine elektrische Leistungsquelle (SE),
b. ein Gestell (C), das die elektrische Leistungsquelle trägt,
c. eine erste Welle (A1), die einen Antrieb (P) des angetriebenen Fahrzeugs trägt, die drehbar am Gestell um eine erste Drehachse (AX1) gelagert ist, und
d. eine erste Drehantriebsvorrichtung (E1) der ersten Welle um die erste Drehachse,
wobei das Gestell ein erstes Drehführungselement (OGR1) der ersten Welle um die erste Drehachse aufweist, und wobei die erste Welle ein erstes Komplementärelement (OC1) aufweist, das angeordnet ist, um mechanisch mit dem ersten Führungselement zusammenzuwirken, um so mindestens einen Freiheitsgrad der ersten Welle aufzuheben, wobei das erste Führungselement und das erste Komplementärelement elektrisch leitfähig sind und elektrisch miteinander verbunden sind, wobei das erste Führungselement elektrisch mit der elektrischen Leistungsquelle verbunden ist und das erste Komplementärlement elektrisch mit dem Antrieb verbunden ist.

2. Angetriebenes Fahrzeug (D1; D2) nach dem vorstehenden Anspruch, wobei die erste Antriebsvorrichtung (E1) einen Motor aufweist, der mit einer um die erste Drehachse (AX1) drehbaren Welle ausgestattet ist; wobei die erste Welle (A1) ein Übertragungselement aufweist, das mechanisch mit der Drehachse des Motors verbunden ist, so dass eine Drehung der Motorachse auf die erste Welle übertragen wird; wobei das erste Komplementärelement (OC1) ein erstes Lager (PL1) aufweist, das an dem Übertragungselement montiert ist, und wobei das erste Drehführungselement (OGR1) ein zweites Lager aufweist, das konzentrisch um das erste Lager herum montiert ist.

3. Angetriebenes Fahrzeug (D1; D2) nach dem vorstehenden Anspruch, wobei die erste Welle (A1) einen Rahmen aufweist, der zwei diametral gegenüberliegende Drehzapfen umfasst, die jeweils schwenkbar in einer Aussparung des Gestells (C) montiert sind, wobei die Aussparungen einander gegenüberliegen, wobei das Übertragungselement an einem der Drehzapfen angeordnet ist, um sich in eine der genannten Aussparungen zu erstrecken, und sich die Drehachse des Motors in diese Aussparung erstreckt, und wobei das erste Lager (PL1) in dieser Aussparung angeordnet ist, wobei das Profil der Aussparung im Wesentlichen dem des zweiten Lagers (PL2) entspricht.

4. Angetriebenes Fahrzeug (D1; D2) nach Anspruch 1, wobei die erste Welle (A1) einen um die erste Drehachse (AX1) rotationssymmetrischen Zahnkranz umfasst, wobei das erste Komplementärelement (OC1) ein auf dem Zahnkranz montiertes Band aufweist und wobei das erste Drehführungselement (OGR1) einen Gleitkörper aufweist, der flächig auf dem genannten Band (B1) aufliegt.

5. Angetriebenes Fahrzeug (D1; D2) nach dem vorstehenden Anspruch, **dadurch gekennzeichnet, dass** das Gestell (C) ein Modul (3PF1) zum Andrücken des Gleitkörpers an das Band (B1) aufweist.

6. Angetriebenes Fahrzeug (D1; D2) nach einem der vorstehenden Ansprüche, **dadurch gekennzeichnet, dass** es ein zweites Drehführungselement (OGR2) der ersten Welle um die erste Drehachse (AX1) aufweist und **dadurch, dass** die erste Welle (A1) ein zweites Komplementärelement (OC2) aufweist, das angeordnet ist, um mechanisch mit dem zweiten Führungselement (OGR1) zusammenzuwirken, um so mindestens einen Freiheitsgrad der ersten Welle aufzuheben, **dadurch, dass** das zweite Führungselement und das zweite Komplementärelement elektrisch leitfähig sind und elektrisch miteinander verbunden sind, wobei das zweite Führungselement elektrisch mit der elektrischen Leistungsquelle (SE) verbunden ist und das zweite Komplementärelement elektrisch mit dem Antrieb (P) verbunden ist.

7. Angetriebenes Fahrzeug (D1; D2) nach einem der vorstehenden Ansprüche, wobei das angetriebene Fahrzeug eine zentrale Steuereinheit (UCC) des angetriebenen Fahrzeugs aufweist, die in der Lage ist, Daten mit dem Antrieb (P) auszutauschen, wobei das angetriebene Fahrzeug eine Vielzahl von festen Füßen (PPF) aufweist, die sich vom Gestell (C) zu einer gemeinsamen Basis erstrecken, sowie eine Vielzahl von beweglichen Füßen (PPM), die sich von einer beweglichen Basis, die drehbar an der gemeinsamen Basis um die erste Drehachse montiert ist, zur ersten Welle (A1) erstrecken, wobei ein Drehkollektor (COL) in der gemeinsamen Basis und in der beweglichen Basis angeordnet ist und wobei sich mindestens ein Kabel von der zentralen Steuereinheit zum Drehkollektor erstreckt, wobei es durch einen der festen Füße verläuft, und wobei sich ein weiteres Kabel vom Drehkollektor zum Antrieb erstreckt, wobei es durch einen der beweglichen Füße verläuft.

8. Angetriebenes Fahrzeug (D1; D2) nach einem der vorstehenden Ansprüche, **dadurch gekennzeichnet, dass** es aufweist:
a. eine zweite Welle (A2), die an der ersten Welle (A1) um eine zweite Drehachse (AX2) drehbar gelagert ist, wobei die zweite Welle den Antrieb (P) des angetriebenen Fahrzeugs trägt;
b. eine zweite Drehantriebsvorrichtung (E2) der zweiten Welle um die zweite Drehachse,
**dadurch gekennzeichnet, dass** die erste Welle ein erstes Drehführungselement (OGR1) der zweiten Welle um die genannte zweite Drehachse aufweist und **dadurch, dass** die zweite Welle ein erstes Komplementärelement (OC1) aufweist, das angeordnet ist, um mechanisch mit dem ersten Führungselement der ersten Welle zusammenzuwirken, um so mindestens einen Freiheitsgrad der zweiten Welle aufzuheben, **dadurch, dass** das erste Führungselement und das erste Komplementärelement elektrisch leitfähig sind und elektrisch miteinander verbunden sind, wobei das erste Führungselement der ersten Welle elektrisch mit dem ersten Komplementärelement der ersten Welle verbunden ist und das erste Komplementärelement der zweiten Welle elektrisch mit dem Antrieb verbunden ist.

9. Angetriebenes Fahrzeug (D1; D2) nach dem vorstehenden Anspruch, wobei die zweite Antriebsvorrichtung (E2) einen Motor aufweist, der mit einer um die zweite Drehachse drehbaren Welle ausgestattet ist; wobei die zweite Welle (A2) ein Übertragungselement aufweist, das mechanisch mit der Drehachse des Motors verbunden ist, so dass eine Drehung der Motorachse auf die zweite Welle übertragen wird; wobei das erste Komplementärelement (OC1) der zweiten Welle ein erstes Lager (PL1) aufweist, das an dem Übertragungselement der zweiten Welle montiert ist, und wobei das erste Führungselement (OGR1) der ersten Welle (A1) ein zweites Lager (PL 2) aufweist, das konzentrisch um das erste Lager herum montiert ist.

10. Angetriebenes Fahrzeug (D1; D2) nach dem vorstehenden Anspruch, wobei das angetriebene Fahrzeug eine zentrale Steuereinheit (UCC) des angetriebenen Fahrzeugs aufweist, die in der Lage ist, Daten mit dem Antrieb (P) auszutauschen, wobei die zweite Welle (A2) zwei diametral gegenüberliegende Drehzapfen umfasst, die jeweils schwenkbar in einer Aussparung der ersten Welle (A1) montiert sind, wobei die Aussparungen einander gegenüberliegen, wobei das Übertragungselement der zweiten Welle an einem der Drehzapfen der zweiten Welle angeordnet ist, um sich in eine der genannten Aussparungen zu erstrecken, und sich die Drehachse des Motors in diese Aussparung erstreckt, wobei ein Drehkollektor (COL) in der anderen der Aussparungen der ersten Welle angeordnet ist, und wobei sich mindestens ein Kabel von der zentralen Steuereinheit zum Drehkollektor erstreckt, wobei es durch die erste Welle verläuft, und wobei sich ein weiteres Kabel vom Drehkollektor zum Antrieb erstreckt, wobei es durch die zweite Welle verläuft.

11. Angetriebenes Fahrzeug (D1; D2) nach einem der vorstehenden Ansprüche, **dadurch gekennzeichnet, dass** es eine omnidirektionale Luftdrohne ist.

## Claims

1. A propelled vehicle (D1; D2) comprising:
a. an electrical power source (SE),
b. a chassis (C) supporting the electrical power source,
c. a first shaft (A1) supporting a propulsion unit (P) of said propelled vehicle, mounted so as to rotate on the chassis about a first axis of rotation (AX1), and
d. a first drive device (E1) for rotating the first shaft about said first axis of rotation, such that the chassis comprises a first member (OGR1) for guiding the first shaft in rotation about said first axis of rotation, and such that the first shaft comprises a first complementary member (OC1) arranged to mechanically cooperate with the first guide member so as to remove at least one degree of freedom from the first shaft, such that the first guide member and the first complementary member are electrically conductive and are electrically connected to one another, the first guide member being electrically connected to the electrical power source and the first complementary member being electrically connected to the propulsion unit.

2. The propelled vehicle (D1; D2) according to the preceding claim, wherein the first drive device (E1) comprises a motor provided with a rotary shaft that rotates about the first axis of rotation (AX1); wherein the first shaft (A1) comprises a transmission member that is mechanically connected to the rotary shaft of the motor so that rotation of the shaft of the motor is transmitted to the first shaft; wherein the first complementary member (OC1) comprises a first bearing (PL1) which is mounted on the transmission member and wherein the first rotational guide member (OGR1) comprises a second bearing which is mounted concentrically around the first bearing.

3. The propelled vehicle (D1; D2) according to the preceding claim, wherein the first shaft (A1) comprises a frame comprising two diametrically opposed pivots, each pivotably mounted in a recess in the chassis (C), said recesses facing one another, wherein the transmission member is arranged on one of the pivots so as to extend into one of said recesses and the rotary shaft of the motor extends into this recess and wherein the first bearing (PL1) is arranged in this recess, the profile of the recess corresponding substantially to that of the second bearing (PL2).

4. The propelled vehicle (D1; D2) according to claim 1, wherein the first shaft (A1) comprises a ring unit that is rotationally symmetrical about the first axis of rotation (AX1), wherein the first complementary member (OC1) comprises a band mounted on the ring unit and wherein the first rotational guide member (OGR1) comprises a pad bearing flat against said band (B1).

5. The propelled vehicle (D1; D2) according to the preceding claim,
**characterized in that** the chassis (C) comprises a module (3PF1) for pressing the pad onto said band (B1).

6. The propelled vehicle (D1; D2) according to any of the preceding claims,
**characterized in that** it comprises a second member (OGR2) for guiding the first shaft in rotation about said first axis of rotation (AX1), and **in that** the first shaft (A1) comprises a second complementary member (OC2) arranged to mechanically cooperate with the second guide member (OGR1) so as to remove at least one degree of freedom from the first shaft, **in that** the second guide member and the second complementary member are electrically conductive and are electrically connected to one another, the second guide member being electrically connected to the electrical power source (SE) and the second complementary member being electrically connected to the propulsion unit (P).

7. The propelled vehicle (D1; D2) according to any of the preceding claims, the propelled vehicle comprising a central control unit (UCC) for the propelled vehicle which is capable of exchanging data with the propulsion unit (P), wherein the propelled vehicle comprises a plurality of fixed legs (PPF) which extend from the chassis (C) to a common base and a plurality of movable legs (PPM) which extend from a movable base, which is mounted on the common base so as to rotate about the first axis of rotation, to the first shaft (A1), wherein a rotary collector (COL) is arranged in the common base and in the movable base and wherein at least one cable extends from the central control unit to the rotary collector through one of the fixed legs and wherein another cable extends from the rotary collector to the propulsion unit through one of the movable legs.

8. The propelled vehicle (D1; D2) according to any of the preceding claims,
**characterized in that** it comprises:
a. a second shaft (A2) mounted on the first shaft (A1) so as to rotate about a second axis of rotation (AX2), the second shaft supporting said propulsion unit (P) of said propelled vehicle;
b. a second drive device (E2) for rotating the second shaft about said second axis of rotation,
**characterized in that** the first shaft comprises a first member (OGR1) for guiding the second shaft in rotation about said second axis of rotation and **in that** the second shaft comprises a first complementary member (OC1) arranged to mechanically cooperate with the first guide member of the first shaft so as to remove at least one degree of freedom from the second shaft, **in that** the first guide member and the first complementary member are electrically conductive and are electrically connected to one another, the first guide member of the first shaft being electrically connected to the first complementary member of the first shaft and the first complementary member of the second shaft being electrically connected to the propulsion unit

9. The propelled vehicle (D1; D2) according to the preceding claim, wherein the second drive device (E2) comprises a motor provided with a rotary shaft that rotates about the second axis of rotation; wherein the second shaft (A2) comprises a transmission member that is mechanically connected to the rotary shaft of the motor so that rotation of the shaft of the motor is transmitted to the second shaft; wherein the first complementary member (OC1) of the second shaft comprises a first bearing (PL1) which is mounted on the transmission member of the second shaft and wherein the first guide member (OGR1) of the first shaft (A1) comprises a second bearing (PL2) which is mounted concentrically around the first bearing.

10. The propelled vehicle (D1; D2) according to the preceding claim, the propelled vehicle comprising a central control unit (UCC) for the propelled vehicle which is capable of exchanging data with the propulsion unit (P), wherein the second shaft (A2) comprises two diametrically opposed pivots, each pivotably mounted in a recess in the first shaft (A1), said recesses facing one another, wherein the transmission member of the second shaft is arranged on one of the pivots of the second shaft to extend into one of said recesses and the rotary shaft of the motor extends into this recess, wherein a rotary collector (COL) is arranged in the other of the recesses in the first shaft, and wherein at least one cable extends from the central control unit to the rotary collector through the first shaft and wherein another cable extends from the rotary collector to the propulsion unit through the second shaft.

11. The propelled vehicle (D1; D2) according to any of the preceding claims, **characterized in that** it is an omnidirectional aerial drone.
